# EUROPEAN PATENT SPECIFICATION

(11) **EP 0 474 634 B1**
(45) Date of publication and mention of the grant of the patent: **22.04.1998**
(21) Application number: 90902811.0
(22) Date of filing: 07.02.1990
(51) Int. Cl.: B01D 71/02, B01D 69/12

(54) **GAS-PERMEABLE, INORGANIC MEMBRANES**
GASDURCHLÄSSIGE ANORGANISCHE MEMBRANEN
MEMBRANES INORGANIQUES POUR LA SEPARATION DES GAZ

(30) Priority: 07.02.1989 GB 8902649
(43) Date of publication of application: 18.03.1992
(73) Proprietor: NORTH WEST WATER GROUP PLC, Warrington WA5 3LW (GB)
(72) Inventor: DAVIDSON, Alexander, Philip, Shipston-on-Stour Warwickshire CV36 5PG (GB)
(74) Representative: Allman, Peter John
(86) International application number: GB9000187
(87) International publication number: WO9009231

(56) References cited:
- EP-A- 0 141 176
- EP-A- 0 195 549
- DE-B- 1 068 614
- FR-A- 2 177 881
- FR-A- 2 549 736
- LU-A- 36 783
- LU-A- 79 631
- US-A- 3 022 187

## Description

This invention is concerned with permeable membranes of a particular structure comprising both a porous or microporous non-metallic layer and a permeable metal layer.

EP-A-348041 (filed 23 May 1989 and published 27 December 1989) describes a composite membrane comprising an inorganic support having interstices and porous inorganic films of sintered non-metallic particles carried by the support and bridging the interstices thereof. Preferably the membrane is plastically deformable without substantially altering the porosity of permeability of the films. Preferably the films are substantially co-planar with the support.

GB-A-832317 describes a process for making fine-pored metal filters by causing a metal carbonyl to decompose and deposit metal on a heated metal wire mesh which may afterwards be rolled, pressed and sintered.

US-A-2,980,532 describes a method of producing a permeable membrane by vaporising a metal and depositing it in chemically combined form on a metal network.

DE-U-8325775 describes a fine sieve of metal fabric with a metal coating narrowing the mesh width in a membrane-like manner.

US-A-4,589,891 describes a process of manufacturing a hydrogen permeable membrane in which a hydrogen permeable metal is deposited galvanically on a fine mesh metal fabric.

EP-A-0 195 549 discloses a membrane comprising a porous inorganic support carrying a composite film which bridges the pores thereof. The composite film comprises a microporous layer which is made of glassy material and a gas-permeable metal layer.

LU-A-79631 discloses a membrane comprising a porous layer of sintered inorganic non-metallic particles carried by an inorganic support of a metal fibre mesh.

The present invention provides a membrane comprising an inorganic support having interstices with an average diameter in the range 5 µm to 5 mm and composite films carried by the support and bridging the interstices thereof, each composite film comprising a porous or microporous layer of inorganic non-metallic particles and a gas-permeable dense layer of metal, characterised in that the interestices have a length which is less than ten times their diameter, the support is of woven or non-woven fibres, and the porous or microporous layer is of partly sintered inorganic non-metallic particles.

Preferably the metal is palladium, or an alloy of Pd with other metals such as Al, Ti, Ni, Cu, Mo, Ru, Rh, Ag, In, W, Re, Pt or Y (Advanced Materials, 1989, 8, 251-260).

A pore is characterised by having a length which is large in comparison to its diameter, and the latter is no larger than 4 µm. By contrast, the interstices of the support are characterised by having a diameter greater than 5 µm, preferably greater than 10 µm, and the length of the interstice is preferably less than 10 times the diameter. The term diameter is here used to refer to the average cross sectional dimension of the aperture, or to the minimum cross sectional dimension when the aperture is far from circular.

The support is of woven or non-woven fibres, the term fibre being used to include filaments and wires which may be continuous or discontinuous. Although glass and other refractories can be used, the support is preferably of metal, particularly in the form of a woven metal mesh. Suitable woven mesh supports may comprise one or more layers of meshes and which may have a different interstice sizes. The nature of the metal is not very critical, and one suitable metal is stainless steel.

The interstices of the support have an average diameter in the range 5µm to 5 mm, preferably 10 µm to 1 mm. A preferred support is a 100 mesh (Net opening width, after deducting wire dia., = 140 µm) woven stainless steel mesh which has interstices of 135 µm diameter. The utility of 70 mesh (Net opening width, after deducting wire dia., = 203 µm) and even 20 mesh (Net opening width, after deducting wire dia., = 762 µm) woven metal sheets has been demonstrated.

An advantage of such membranes is that composite films are generally coplanar with the support, so that bending the membrane does not necessarily involve stretching the films. It may be preferable to flatten the weave, e.g., by rolling or hammering the mesh or sheet, so as to ensure that the film bridging each pore is more nearly coplanar with the sheet.

Alternatively, the support may be an expanded metal mesh.

The interstices of the support are bridged by composite films of inorganic material carried by the support. These composite films comprise: a porous layer of partly sintered inorganic non-metallic particles; preferably a microporous coating on at least one surface of the porous layer; and a permeable metal layer, generally carried on a surface of the porous layer or more preferably on a surface of the microporous coating. There may be some, generally slight, penetration of the metal layer into the porous layer or the microporous coating.

Porous films include those suitable for separation and filtration processes including the ultra-filtration and micro-filtration ranges. Ultra-filtration is generally accepted to be defined by retention of molecules or particles of the size range 20 nm down to 1 nm (1 nm = 1 nanometer = 10⁻⁹m).

Although there is no critical upper limit, the porous layer preferably has an average pore diameter not more than 2% of the average diameter of the fibres of the support. After sintering, the pore size of the porous layer is related to the particle size. Large particles, above about 1 µm in diameter, result in a pore size of approximately 10% of the particle diameter. Sub-micron particles may tend to give a pore size which is about 50% of the particle diameter.

The porous layer may be of sintered non-metallic particles, for example titania, alumina, ceria, zirconia, lead zirconate titanate (PZT), silica, mullite, refractory metal oxides generally, and mixtures thereof. Such layers can be formed by techniques generally known, by applying a suspension of the particles or precursors thereof to the support, dewatering the suspension (or otherwise removing the suspending medium), and heating the resulting layer to a temperature to partially sinter the particles. Where the particles are of sub-micron size, this technique may involve applying a sol to the support, converting the sol to a gel and heating the gel. It is necessary that the contact area between the particles and the surfaces of the support be sufficiently great for the two to adhere together so that the films are bound to the support. This requirement places an upper limit on the permissible size of the particles. For example, where the support is composed of fibres, the particles of the films should have an average diameter not more than 20%, preferably not more than 10%, of the average diameter of the fibres.

Where porous inorganic layers have been formed bridging the interstices of the support, it may be advantageous to apply over one or both surfaces thereof a microporous, inorganic coating. Such microporous inorganic coatings preferably have an average thickness of less than 10.0 µm, most preferably from 0.05 to 5.0 µm and a substantially uniform pore size from 0.5 to 200 nm, preferably 0.5 to 30 nm, substantially free of cracks and pin holes, and may be formed by a sol gel technique as described in EPA 242208. Such coatings may be applied by dipping, spraying or filtration of a suspension of fine ceramic particles, preferably in an aqueous medium, and followed by sintering.

The freshly coated support is then heated to transform the layer into a permeable or porous refractory film. For example, heating converts a boehmite gel layer in a mechanically stable gamma-Al₂O₃ structure. Heating conditions are not critical to the invention and may be conventional, bearing in mind the need to avoid thermal shock which might result in the formation of cracks and pin-holes.

The composite films comprise permeable metal layers, which may be fully dense sintered layers of a metal which is permeable to a gas. For example a palladium sol or suspension of palladium powder in a liquid medium (a suitable powder with a mean particle size of about 0.3 µm is available from Goodfellow Metals, Cambridge) may be used to prepare a palladium layer which is non-porous but is permeable to hydrogen. An advantage of this technique is that the resultant layers are very thin, far thinner than conventional rolled palladium foils. The fully dense palladium layers can be supported on the porous or microporous ceramic layers bridging the interstices.

Other techniques available for applying the metal layer include sputtering, electroless deposition, electroplating, chemical vapour deposition and physical vapour deposition. Provided that enough metal is applied to form a complete layer, the thickness of the layer is not critical, and thinner layers have higher permeabilities and lower costs. Preferred layers for metal deposition are those in the ultra-filtration and microfiltration ranges discussed above.

It is preferred that the support has a co-efficient of linear expansion at least as great as, and desirably greater than, that of the composite films. This feature has the following consequence. The membrane first comes into existence at an elevated temperature at which it is heated to convert a gel to a film or to sinter particles into a film. On subsequent cooling, the support shrinks faster than the films, with the result that the films are under compression. As a result, any cracks that do develop in the films bridging the interstices due to damage or deformation, tend to close rather than to propagate.

The membranes of this invention can preferably be plastically deformed without substantially altering the porosity or permeability of the composite films. Where the film is a composite membrane comprising several layers, the permeable layer must be on the inside of the bend, i.e. under compression. When the support is a fibrous mesh, this test should be performed by flexing the support about an axis parallel to one set of fibres. Because the films are preferably generally co-planar with the support, such flexing does not significantly stretch or compress the films. Because the films are generally in a state of compression, any cracks that may develop tend to close rather than to propagate. Film-forming material overlying the (fibres of the) support may stretch and crack when the support is flexed, but such stretching or cracking should not have any major effect on the porosity or permeability of the composite films bridging the interstices.

Preferably each composite film shows a meniscus effect having a minimum thickness within the interstice which is not greater than the thickness of the support. Palladium has been shown not to spall off the porous refractory layers when the membrane is heated.

The following advantages should be noted for various embodiments of the invention:
a) The membranes are plastically deformable without substantial loss of performance, and are therefore less likely to suffer from handling abuse.
b) Although defects are inevitable in films comprising refractory oxides, these defects do not propagate, because the films are in compression rather than tension at ambient temperature.
c) Supports of metal or glass fibre mesh are cheap compared to ceramic supports.
d) Metal supports are easily fixed, e.g. by welding, crimping or brazing, to a rigid metallic support structure, either before or after application of the composite films.
e) Woven and non-woven mesh sheets are very flexible and can readily be formed into desired shapes such as tubes or spirals prior to application of the sol.
f) Metal supports are electrically conductive, and the composite films are also electrically conductive.
g) A woven metal mesh support provides strength, and is plastically deformable and easily attached to other structures. Porous or microporous refractory non-metallic layers provide many pores of uniform fine pore size; a good base for deposited layers of palladium or other metal.

The following Examples illustrate the invention. Examples 1 and 2 describe intermediate products.

### EXAMPLE 1

### Preparation of microporous zirconia membrane

3.5 g of Methocel binder was dissolved in 100 ml of distilled and deionised water. 30g of sub-micron zirconia powder was added to the mixture to form a slurry, which was then ball-milled for 24 hours.

25 mm discs of woven 100 mesh (Net opening width, after deducting wire dia., = 140 µm) Hastelloy X (a Ni, Cr, Fe, Si, Mn, Mo alloy, the mesh supplied by G. Bopp & Co., London N2) were coated with the slurry using a simple dipping or painting procedure, and fired to 800°C in a mild reducing atmosphere. A second coat was applied in order to heal small cracks in the first coat, after which the firing schedule was repeated.

The composite membrane thus formed comprised menisci of zirconia suspended within the Hastelloy mesh interstices. These menisci had a minimum thickness of 15 to 20 µm. The membrane exhibited a pure water flux of 0.2 mlmin⁻¹cm⁻² at 70 kPa and a gas burst pressure in excess of 1 mPa. The membrane, could be cut into a desired shape after firing without incurring mechanical failure of the suspended ceramic films.

### EXAMPLE 2

A Boehmite sol of concentration 30 gl⁻¹ was prepared by controlled hydrolysis of aluminium alkoxide. The dried and calcined (450°C) gel formed from the sol was highly porous, with a mean pore size of about 4 nm.

One face of the porous membrane described in Example 1 was coated with the Boehmite sol by contacting the membrane with the surface of the sol, followed by drying in air and heat treating for 1 hour at 450°C. The composite membrane thus formed had a sol-gel coating approximately 2 µm thick, and exhibited a pure water flow rate of 0.01 mlmin⁻¹cm⁻² at 112 kPa.

### Test Procedure

An experimental apparatus was made as follows. The 25 mm diameter membrane sample was mounted so that it separated two chambers, each of which had a gas entry and exit port. A differential pressure gauge was mounted so as to measure the pressure difference between the two chambers, and control valves in the exit lines enabled adjustment of the pressure in one or other of the chambers at constant gas flow-rate. 5% hydrogen in argon mixture and pure nitrogen gas streams were controlled by commercial mass flow controllers. The argon/hydrogen mixture flowed across one face of the membrane, the nitrogen flowed across the other face.

Experiments were conducted in the following way. As the apparatus was heated to the test temperature of 350°C, it was purged of air by flowing the gases through the chambers at a rate of 30 mlmin⁻¹. The nitrogen gas flow rate was then reduced to 2 mlmin⁻¹. This gas was then continuously analysed by a commercial quadrupole mass spectrometer (Hiden Analytical Ltd, Warrington), fitted with a vacuum pumped atmospheric pressure sampling system. The mass spectrometer chamber was pumped to a base pressure of 2.67 x 10⁻⁶ Pa (2 x 10⁻⁸ torr) by a turbomolecular/rotary vacuum pump combination, but still showed a residual hydrogen partial pressure.

Proof that the palladium membrane was selectively permeable to hydrogen, and that this was due to diffusion through the metal rather than being due to molecular flow through residual pores needed two pieces of evidence. The first was that no argon was detected by the mass spectrometer. The second was that at least part of the hydrogen signal was due to hydrogen entering the analysis equipment mixed with the nitrogen. This test was made by stopping the argon/hydrogen gas flow. After an arbitrary period (dependent upon the quantity of palladium in the membrane) the hydrogen signal should decrease to the baseline level of the analysis equipment. The argon/hydrogen flow was then re-started and again after an arbitrary period the hydrogen signal should rise again to the original level.

### EXAMPLE 3

### Palladium metal composite membranes prepared by electroless deposition in γ-alumina ultrafiltration membranes supported by composite microporous membrane

A membrane was prepared as described in Example 1, and coated with an ∼ 40 Å (1 Å = 10⁻¹mm = 10⁻¹⁰m) pore-sized γ-alumina ultrafiltration layer, as described in Example 2. It was coated with palladium by a modified electroless deposition procedure.

The membrane in the form of a 25 mm diameter disc was soaked in a 0.01 M solution of stannous chloride, dried, then immersed in a 0.01 M solution of palladium chloride and dried. This is a standard surface activation step for electroless deposition (A. R. Burkin, 'The Chemistry of Hydrometallurgical Processes', Spon, London, 1966, pages 145/6). The membrane was then soaked in a 50% diluted solution of hydrazine hydrate, and a 0.1 M solution of palladium sulphate sprayed onto the small-pored side of the films with a commercial paint sprayer. After the membrane had been dried, the procedure was repeated. In this way, scanning electron microscopical examination showed that the surface of the films had been coated completely by < 0.1 µm thick continuous layer of palladium metal, with very fine grain size and extending only a little way into the ∼ 40 Å (1 Å = 10⁻¹mm = 10⁻¹⁰m) slit-shaped pores in the γ-alumina layer.

Using the test procedure described above, the membrane was shown to be selectively permeable to hydrogen.

### EXAMPLE 4

### Palladium metal composite membranes prepared by sputtering on γ-alumina ultrafiltration membranes supported by a composite microporous membrane

A membrane was prepared as described in Example 1, and coated with ∼ 40 Å (1 Å = 10⁻¹ mm = 10⁻¹⁰ m) pore-sized γ-alumina ultrafiltration layer as described in Example 2.

The membrane in the form of a 25 mm diameter disc was sputter-coated with palladium metal in a commercial sputter-coating device. The ionising gas was argon. A specimen - palladium foil target distance of 5 cm, and a total current of 30 mA was used for 1 hour. It was found that better adhesion of the sputtered palladium metal was obtained by pre-coating the γ-alumina with palladium atoms, as described for the surface activation step in Example 3. The palladium thin film thickness was measured by scanning electron microscopy to be approximately 0.5 µm and completely covered the γ-alumina surface layer.

Using the test procedure described above, the membrane was shown to be selectively permeable to hydrogen.

### EXAMPLE 5

### Palladium metal composite membranes prepared by coating a composite microporous membrane with a palladium metal powder slurry and sintering the powder

A membrane was prepared as described in Example 1. It was coated by brushing a palladium metal powder slurry prepared as follows.

1 gram of nominally 0.3 µm diameter palladium metal powder (Goodfellow metals, Cambridge) was dispersed ultrasonically in 2 ml of xylene to which had been added 1 ml of a 10% solution in xylene of Epikote 836-C-75 (Hermetite Products Ltd., West Drayton - this is a commercial floor levelling material, essentially an epoxy resin solution).

The powder coating was then sintered in a 5% hydrogen/argon atmosphere using the following heat treatment schedule; 2K/min heating to 200°C, 30 minutes hold at 200°C, then 2K/min heating to 900°C followed by 2 hours at 900°C, then furnace cooling. A second coating was then carried out using the same procedure.

The resultant palladium film had no through pores, but was rough and no firm estimate of thickness of the fully dense part of the metal could be made. Scanning electron microscopy showed, however, that during the first coating operation there had been some slight penetration of the largest pores of the microporous zirconia membrane by the palladium powder slurry. The powder appeared to have sintered to a fully dense metal layer in the vicinity of the zirconia membrane surface, but the overlying powder was less well packed, and had not sintered to full density. Using the test procedure described above, the membrane was shown to be selectively permeable to hydrogen.

## Claims

1. A membrane comprising an inorganic support having interstices with an average diameter in the range 5 µm to 5 mm and composite films carried by the support and bridging the interstices thereof, each composite film comprising a porous or microporous layer of inorganic non-metallic particles and a gas-permeable dense layer of metal, characterised in that the interestices have a length which is less than ten times their diameter, the support is of woven or non-woven fibres, and the porous or microporous layer is of partly sintered inorganic non-metallic particles.

2. A membrane as claimed in claim 1, wherein the metal is palladium.

3. A membrane as claimed in claim 1 or claim 2, wherein the composite films are substantially coplanar with the support.

4. A membrane as claimed in any one of claims 1 to 3, wherein the support is of metal.

5. A membrane as claimed in claim 4, wherein the support is a woven metal mesh.

6. A membrane as claimed in any one of claims 1 to 5, wherein each composite film comprises a porous layer of partly sintered oxide particles.

7. A membrane as claimed in claim 6, wherein the porous layer of partly sintered oxide particles carries on at least one surface a microporous inorganic coating.

8. A membrane as claimed in claim 6 or claim 7, wherein the porous layer or the microporous coating carries the gas-permeable dense metal layer on its surface.

9. A membrane as claimed in any one of claims 1 to 8, wherein each composite film shows a meniscus effect having a minimum thickness within the interstice which is not greater than the thickness of the support.

## Patentansprüche

1. Membran, die einen anorganischen Träger mit Zwischenräumen mit einem Durchschnittsdurchmesser im Bereich von 5 µm bis 5 mm und Verbundfolien umfaßt, die auf dem Träger aufliegen und die Zwischenräume desselben überbrücken, wobei jede Verbundfolie eine poren- oder mikroporenhaltige Schicht anorganischer Nichtmetallteilchen und eine gasdurchlässige dichte Metallschicht umfaßt, dadurch gekennzeichnet, daß die Zwischenräume eine Länge aufweisen, die geringer ist als das Zehnfache ihres Durchmessers, der Träger aus gewebten oder nichtgewebten Fasern und die poren- oder mikroporenhaltige Schicht aus teilweise gesinterten anorganischen Nichtmetallteilchen bestellt.

2. Membran nach Anspruch 1, bei der das Metall Palladium ist.

3. Membran nach Anspruch 1 oder Anspruch 2, bei der die Verbundfolien zum Träger im wesentlichen koplanar sind.

4. Membran nach einem der Ansprüche 1 bis 3, bei der der Träger aus Metall besteht.

5. Membran nach Anspruch 4, bei der der Träger aus Metalldrahtsiebgewebe besteht.

6. Membran nach einem der Ansprüche 1 bis 5, bei der jede Verbundfolie eine porenhaltige Schicht teilweise gesinterter Oxidteilchen umfaßt.

7. Membran nach Anspruch 6, bei der die porenhaltige Schicht teilweise gesinterter Oxidteilchen auf mindestens einer Oberfläche eine mikroporenhaltige anorganische Beschichtung trägt.

8. Membran nach Anspruch 6 oder 7, bei der die porenhaltige Schicht oder die mikroporenhaltige Beschichtung die gasdurchlässige dichte Metallschicht auf ihrer Oberfläche trägt.

9. Membran nach einem der Ansprüche 1 bis 8, bei der jede Verbundfolie einen Meniskuseffekt und eine Mindestdicke innerhalb der Zwischenräume aufweist, die die Dicke des Trägers nicht übersteigt.

## Revendications

1. Membrane comprenant un support inorganique comportant des interstices dont le diamètre moyen se situe dans le domaine de 5 µm à 5 mm et des films composites supportés par le support et surplombant les interstices de ce dernier, chaque film composite comprenant une couche poreuse ou microporeuse de particules non métalliques inorganiques et une couche de métal dense perméable aux gaz, caractérisée en ce que la longueur des interstices est inférieure à dix fois leur diamètre, le support est constitué de fibres tissées ou non tissées et la couche poreuse ou microporeuse est constituée par des particules non métalliques inorganiques partiellement frittées.

2. Membrane selon la revendication 1, dans laquelle le métal est le palladium.

3. Membrane selon la revendication 1 ou 2, dans laquelle les films composites sont sensiblement coplanaires au support.

4. Membrane selon l'une quelconque des revendications 1 à 3, dans laquelle le support est un métal.

5. Membrane selon la revendication 4, dans laquelle le support est un treillis métallique tissé.

6. Membrane selon l'une quelconque des revendications 1 à 5, dans laquelle chaque film composite comprend une couche poreuse de particules d'oxydes partiellement frittées.

7. Membrane selon la revendication 6, dans laquelle la couche poreuse de particules d'oxydes partiellement frittées porte, sur au moins une surface, un revêtement inorganique microporeux.

8. Membrane selon la revendication 6 ou 7, dans laquelle la couche poreuse ou le revêtement microporeux porte, sur sa surface, la couche métallique dense perméable aux gaz.

9. Membrane selon l'une quelconque des revendications 1 à 8, dans laquelle chaque film composite manifeste un effet de ménisque dont l'épaisseur minimale à l'intérieur des interstices n'est pas supérieure à l'épaisseur du support.
